# EUROPEAN PATENT APPLICATION

(11) **EP 1 768 027 A2**
(43) Date of publication of application: **28.03.2007**
(21) Application number: 06120703.1
(22) Date of filing: 14.09.2006
(51) Int. Cl.: G06F 11/36

(54) **Computer program testing system and method**

(30) Priority: 27.09.2005 KR 20050089923
(71) Applicant: SAMSUNG ELECTRONICS CO., LTD., Suwon-si, Gyeonggi-do (KR)
(72) Inventor: Hwang, Soon-hoon, Yongin-si Gyeonggi-do (KR)
(74) Representative: Perkins, Dawn Elizabeth

(57) **Abstract**

A computer program testing method for testing a computer program comprising a plurality of units which perform certain functions, the computer program testing method comprises providing a data storage part which stores the units, a plurality of test functions to test the units, and a plurality of variables to be input into the test functions, extracting, if a unit name to test is input, one of the units corresponding to the input unit name, at least one of the test functions, and at least one of the variables from the data storage part, configuring a test driver to execute the extracted unit, test function, and variable, and executing the test driver.

## Description

The present invention relates to a computer program testing system and method, and more particularly, to a computer program system and method of testing a computer program by a unit.

In response to more complex and ever-changing computer programs or software programs, computer program verification requirements become more complicated and difficult.

Typically, a computer program test is conducted by integration or by a system which performs a general function. In the computer program test, a computer program simulation is carried out by substituting variables into a test program for testing functions of a computer program.

As discussed above, the computer program test is generally conducted not on a component composing a computer program but on a complete computer program.

A test of the component of a computer program requires that a user input test functions and items relating to variables individually. As a result, much time and considerable cost are demanded.

Accordingly, it is an aspect of the present invention to provide a system and method of testing a computer program by a unit easily and effectively.

Additional features of the invention will be set forth in the description which follows, and in part will be apparent from the description, or may be learned by practice of the invention.

The present invention provides a computer program testing system for testing a computer program comprising a plurality of units which perform certain functions, the computer program testing system comprising:
a data storage part which stores the units, a plurality of test functions to test the units, and a plurality of variables to be input into the test functions; means for receiving a user input and identifying a corresponding unit for testing; means for searching the data storage part and extracting the unit for testing, at least one of the test functions, and at least one of the variables from the data storage part; means for configuring a test driver to execute the extracted unit, test function, and variable; and
means for executing the test driver.

The present invention also provides a computer program testing method for testing a computer program comprising a plurality of units which perform certain functions, the computer program testing method comprising: providing a data storage part which stores the units, a plurality of test functions to test the units, and a plurality of variables to be input into the test functions; extracting, if a unit name to test is input, one of the units corresponding to the input unit name, at least one of the test functions, and at least one of the variables from the data storage part; configuring a test driver to execute the extracted unit, test function, and variable; and executing the test driver.

According to an aspect of the present invention, the computer program testing method further comprises a step of storing a result of the execution of the test driver per the variable.

According to an aspect of the present invention, the unit comprises at least a sub-unit.

According to an aspect of the present invention, when a plurality of unit names is input, the test drivers are configured in order of the input of the unit names.

According to an aspect of the present invention, the variable is the number of bytes.

The foregoing and/or other aspects of the present invention can be achieved by providing a method for testing units of a computer program, the method comprising the steps of selecting a unit to be tested, extracting information corresponding to the unit to be tested from a storage device, said information being used to test said selected unit, and testing said unit in accordance with said information, wherein said information comprises of unit information, test function and variables.

It is to be understood that both the foregoing general description and the following detailed description are exemplary and explanatory and are intended to provide further explanation of the invention as claimed.

The above and/or other aspects and advantages of the prevent invention will become apparent and more readily appreciated from the following description of the exemplary embodiments, taken in conjunction with the accompany drawings, in which:
Figure 1 is a block diagram for explaining a computer program testing system according to an embodiment of the present invention; and
Figure 2 is a flowchart for explaining the computer program testing method according to an embodiment of the present invention.

Reference will now be made in detail to the embodiments of the present invention, examples of which are illustrated in the accompanying drawings, wherein like reference numerals refer to like elements throughout. The embodiments are described below so as to explain the present invention by referring to the figures.

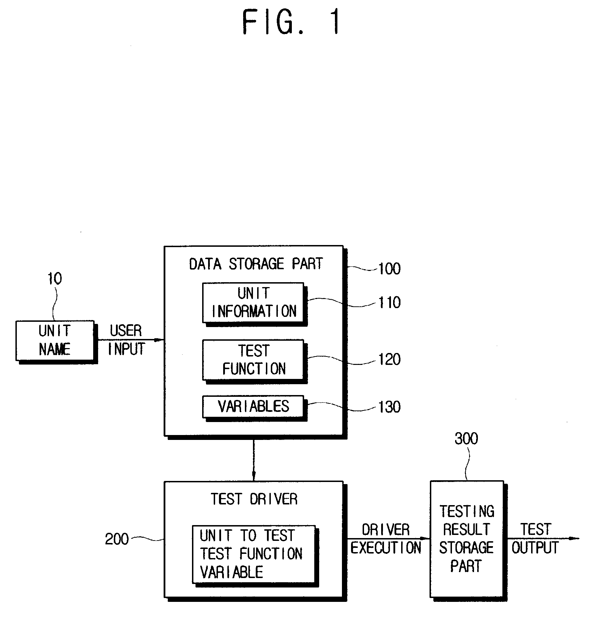

Figure 1 is a block diagram for explaining a computer program testing system according to an embodiment of the present invention. As shown in Figure 1, the computer program testing system extracts data from a data storage part 100, configures a test driver 200 to test a computer program using the extracted data, drives the configured test driver 200, and stores the testing result on the testing result storage 300.

First, a user inputs a unit name 10 to be tested into the testing system. The testing system may be implemented by software and/or hardware. The testing system comprises an input part by which the user can designate or input the unit name 10 for testing a computer program and an interface to display or output the test result.

In the present embodiment, the unit may be a minimum component which composes a computer program. A function may be performed by one or a plurality of units. In other words, the unit is a part of the computer program which needs to be tested independently by the user. The computer program test by a unit is distinguished from a conventional test in which whether a complete computer program functions normally or not. It should be understood that the unit may comprise one or more sub-units and is not limited to a specific size and function.

Once the user inputs the unit name 10 of the unit, that is, a key word or a related term in relation with the unit, then a test is conducted automatically by the testing system. The user may input a plurality of the unit names 10. In that case, the testing system may test the units in order of the input of the unit names 10, or from the unit to the sub-unit or vice-versa. The test order may be changed by a user's setting. The unit name 10 to be tested may be pre-stored for later testing.

A determination on whether the input unit name 10 is an object to be tested directly, a search for a unit name 10 relating to the input unit name 10, or the like is conducted. The data storage part 100 stores unit information 110 on the unit names 10 and a type of the unit names 10. The object to be tested may be the unit name 10 input by the user or a unit relating to the input unit name 10. More specifically, if the user inputs a unit name 10 of a general concept, the testing system determines whether the input unit name 10 is a suitable object to be tested and selects a unit to be tested.

As a result of the search a test function 120 for the selected unit and a plurality of variables 130 to be applied to the test function 120 are selected.

Because the unit is not a complete computer program, a computer program to execute the unit is required to test whether the unit operates normally. The test function 120 may be a part of the complete computer program or a computer program individually designed for the unit test. Once the user inputs the unit name 10, the test function 120 is set corresponding to the input unit name 10 regardless of the form of the test function 120.

When the test function 120 is selected, diverse variables 130 to test the unit are selected. For each unit, there may be a variable which satisfies requirements for allowing the unit to perform a suitable function such as processing speed, processing capacity, etc. Generally, such variable can be the number of bytes corresponding to the capacity of the unit 10.

Next, the testing system configures the test driver 200 to proceed with the unit test. The test driver 200 is defined as a computer program designed by combining the unit, the test function 120, and the variables 130 for testing the unit. According to the present embodiment, a sole test driver 200 is configured for a unit name 10 input by the user.

Then, the configured test driver 200 is executed. The testing system stores test results corresponding to the variables while executing the test driver 200. The test results may be displayed onto a display device or output to an external device such as a printer so that the user can easily perceive them.

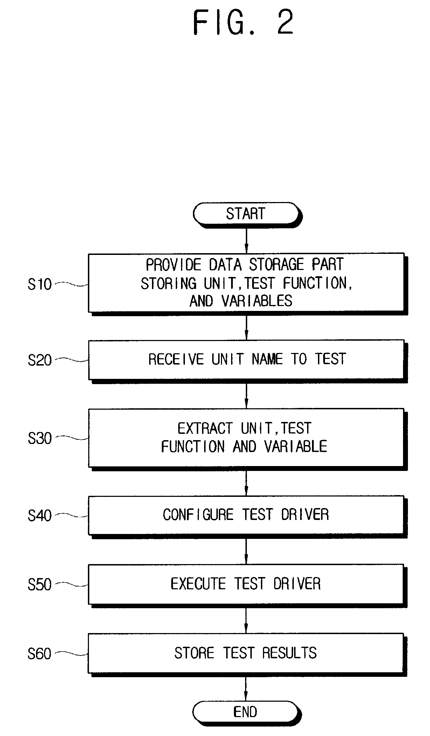

Figure 2 is a flowchart for explaining the computer program testing method according to an embodiment of the present invention, which is explained below in detail.

First, the data storage part 100 is provided, which stores the unit information 110 on the unit name 10, the test function 120 corresponding to the unit, and the plural variables 130. In the present embodiment, the data storage part 100 can be updated with a new unit name 10 and a new test function 120. Note that the data storage unit 100 can be upgraded through various schemes well known to one skilled in the art. Furthermore, the data storage part 100 may have a plurality of unit information, test function and variables corresponding to a plurality of unit name 10.

Next, when the user inputs the unit name 10 to be tested, that is, when the testing system receives a signal relating to the unit name 10 to be tested at operation S20, the testing system automatically controls the data storage part 100 to extract the unit to be tested, the test function 120, and the variables 130 at operation S30.

Then, the test driver 200 is configured with the extracted data on the unit to be tested the test function 120, and the variables 130 at operation S40. The testing system executes the test driver 200 to perform the test at operation S50.

Finally, test results corresponding to the variables 130 may be stored in the testing result storage 300, individually, at operation S60. The user can confirm the stored test results.

As set forth above, the method according to an embodiment of the present invention can easily and effectively realize a computer program test by a unit.

Although a few exemplary embodiments of the present invention have been shown and described, it will be appreciated by those skilled in the art that changes may be made in these embodiments without departing from the scope of the present invention as defined in the appended claims.

## Claims

1. A computer program testing system for testing a computer program comprising a plurality of units which perform certain functions, the computer program testing system comprising:
a data storage part (100) which stores the units, a plurality of test functions (120) to test the units, and a plurality of variables (130) to be input into the test functions;
means for receiving a user input (10) and identifying a corresponding unit for testing;
means for searching the data storage part (100) and extracting the unit for testing, at least one of the test functions (120), and at least one of the variables (130) from the data storage part (100);
means for configuring a test driver (200) to execute the extracted unit, test function (120), and variable (130); and
means for executing the test driver (200).

2. The computer program testing system according to claim 1, further comprising:
results storage means (300) for storing a result of the execution of the test driver (200) and the corresponding variable used.

3. The computer program testing system according to claim 1 or 2, wherein the unit comprises at least a sub-unit.

4. The computer program testing system according to claim any one of the preceding claims, wherein, when a plurality of user inputs (10) correspond to a plurality of units, a test driver (200) for each of the units is configured, in order of the corresponding user inputs.

5. The computer program testing system according to claim any one of the preceding claims, wherein the variable (130) is the number of bytes.

6. A computer program testing method for testing a computer program comprising a plurality of units which perform certain functions, the computer program testing method comprising:
providing a data storage part (100) which stores the units, a plurality of test functions (120) to test the units, and a plurality of variables (130) to be input into the test functions (120);
extracting, if a unit name (10) is input, one of the units corresponding to the input unit name (10), at least one of the test functions (120), and at least one of the variables (130) from the data storage part (100);
configuring a test driver (200) to execute the extracted unit, test function (120), and variable (130); and
executing the test driver (200).

7. The computer program testing method according to claim 6, further comprising:
storing a result of the execution of the test driver (200) per the variable.

8. The computer program testing method according to claim 6 or 7, wherein the unit comprises at least a sub-unit.

9. The computer program testing method according to any one of claims 6 to 8, wherein, when a plurality of unit names is input, the test drivers (200) are configured in order of the input of the unit names (10).

10. The computer program testing method according to any one of claims 6 to 9, wherein the variable (130) is the number of bytes.

11. A method for testing units of a computer program, the method comprising the steps of:
selecting a unit to be tested;
extracting information corresponding to the unit to be tested from a storage device (100), said information being used to test said selected unit; and
testing said unit in accordance with said information;
wherein said information comprises of unit information (110), test function (120) and variables (130).

12. The method according to claim 11, further comprising the step of storing said unit information (110), test function (120) and variables (130).

13. The method according to claim 11 or 12, further comprising the step of configuring a test driver (200) in accordance with said unit information (110), test function (120) and variables (130).

14. The method according to any one of claims 11 to 13, further comprising the step of receiving a user input for selecting a unit to be tested.

15. The method according to claim 14, wherein said user input is a name of said unit.

16. The method according to claim 14, wherein said user input is a name related to the name of said unit.

17. The method according to claim 16, further comprising the step of searching for a suitable unit to be tested in accordance with said user input.

18. The method according to any one of claims 11 to 17, further comprising the step of storing the result of said testing.

19. The method according to any one of claims 11 to 18, wherein said unit tests a predetermined function.

20. The method according to any one of claims 11 to 19, further comprising the step of displaying the result of said testing.

21. The method according to claim 19, wherein said predetermined function is a processing speed.

22. The method according to claim 19 or 21, wherein said predetermined function is a processing capacity.
